(19) Europäisches Patentamt

European Patent Office

Office européen des brevets

(11) **EP 1 705 902 A1**

(12) **EUROPEAN PATENT APPLICATION**
published in accordance with Art. 158(3) EPC

(43) Date of publication:
27.09.2006 Bulletin 2006/39

(51) Int Cl.:
*H04N 5/335* (2006.01)          *H04N 5/232* (2006.01)
*H04N 9/07* (2006.01)

(21) Application number: 04807764.8

(22) Date of filing: 24.12.2004

(86) International application number:
**PCT/JP2004/019408**

(87) International publication number:
**WO 2005/064925 (14.07.2005 Gazette 2005/28)**

(84) Designated Contracting States:
**DE FR GB**

(30) Priority: **26.12.2003 JP 2003434843**

(71) Applicant: **Olympus Corporation
Tokyo 151-0072 (JP)**

(72) Inventor: **WATANABE, Nobuyuki
c/o Int. Property Support Dept.
Hachioji-shi
Tokyo 192-8512 (JP)**

(74) Representative: **von Hellfeld, Axel
Wuesthoff & Wuesthoff
Patent- und Rechtsanwälte
Schweigerstrasse 2
81541 München (DE)**

(54) **IMAGING APPARATUS**

(57) An imaging apparatus 200 has an imaging device 222, which photo-electrically converts an optical image every pixel, and scans the image using X-Y address to acquire an image signal. A read controller 224 generates a read pulse for selecting a pixel in a row or column direction and successively performing a read operation in accordance with the image signal acquired via the imaging device 222 to scan the read pulse. The read controller 224 scans a reset pulse for resetting photo-electrical conversion information recorded in read each row imaging device prior to read pulse scanning for carrying out read of the selected predetermined row.

FIG. 1

## Description

Technical Field

The present invention relates to an imaging apparatus that contains an imaging device for photo-electrically converting an optical image of every pixel and scanning it using an X-Y address to acquire an image signal.

Background Art

There has been conventionally known an imaging apparatus, which thins out an image signal acquired by an image pickup device as the need arises to transform a magnification. For example, JPN. PAT. APPLN. KOKAI Publication No. 2002-314868 discloses the following imaging apparatus. The foregoing disclosed imaging apparatus can achieve wide range zooming at a high resolution.

Disclosure of Invention

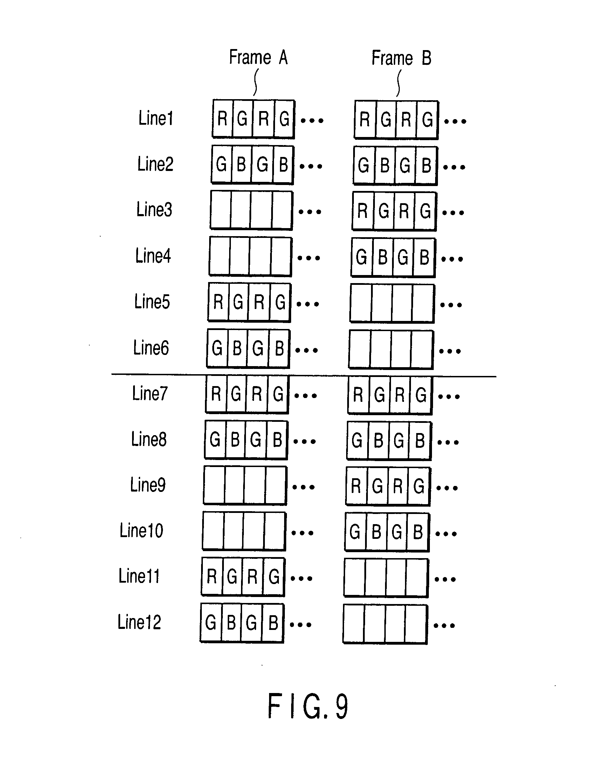

The foregoing Publication No. 2002-314868 discloses the following technique. According to the technique, thinning is changed in order to transform a magnification by scanning an imaging device. The thinning ratio is indicative of reading out one image from the imaging device every m x n pixels (m, n: natural number). Several cut angles of view are changed, and thereby, at least non-continuous zooming is possible. However, the foregoing publication has no disclosure relevant to a pattern change of thinning read when continuous images are imaged (shot). When photo-electrically converted information stored in the imaging device is read, read is carried out at a single thinning read pattern to simultaneously reset the contents. In this case, there is no problem in particular. However, in a dynamic image, the method of using both read and reset is employed if the thinning read pattern is changed every frame for the purpose of achieving both magnification transformation and anti-aliasing. The foregoing method has the following disadvantages. Specifically, read - non-read line changes in a continuous frame, or two time reads are carried out at a continuous frame in one line while only one-time read is carried out in another line. In brief, if various read patterns (see FIG. 9) are generated, storage time of photo-electrically converted information is different every line.

The present invention has been made in view of the foregoing problem. An object of the present invention is to provide an imaging apparatus that can utilize at least stepwise optional magnification transformation and optional electronic shutter stroke via optional pattern thinning read of an imaging device, and can generate a read pulse and reset pulse of the imaging device with a simple configuration.

Another object of the present invention is to provide an imaging apparatus that can generate an effective read pulse and reset pulse when an inter-frame operation is performed.

To achieve the foregoing objects, according to one aspect of the present invention, there is provided an imaging apparatus having an imaging device photo-electrically converting an optical image of every pixel, and scanning the image using an X-Y address to acquire an image signal, comprising:

read means for generating a read pulse for selecting a pixel in a row or column direction and successively performing a read operation in accordance with the image signal acquired via the imaging device, and for scanning the read pulse, the read means scanning a reset pulse for resetting photo-electrical conversion information recorded in each read row imaging device prior to read pulse scanning carrying out read of the selected predetermined row.

Brief Description of Drawings

FIG. 1 is a circuit diagram showing the configuration of an imaging apparatus according to a first embodiment of the present invention;
FIG. 2 is a view to explain an example of achieving read in a state of thinning out two pixels from eight pixels in both horizontal and vertical directions;
FIG. 3A is a conceptual view (1) to explain distortion corrections;
FIG. 3B is a conceptual view (2) to explain distortion corrections;
FIG. 4 is a view showing the configuration of a pipeline to realize thinning read;
FIG. 5 is a table to explain the pipeline processing operation (state transition) by a filtering unit 142;
FIG. 6 is a schematic view (1) showing a state that a read range reference position is shifted;
FIG. 7 is a schematic view (2) showing a state that a read range reference position is shifted;
FIG. 8 is a circuit diagram showing one configuration of a read controller 224 for performing a read operation of this embodiment;
FIG. 9 is a view showing one example of read relevant to frame A and frame B; and
FIG. 10 is a time chart to explain the detailed operation of read pulse and reset pulse in the line direction.

Best Mode for Carrying Out the Invention

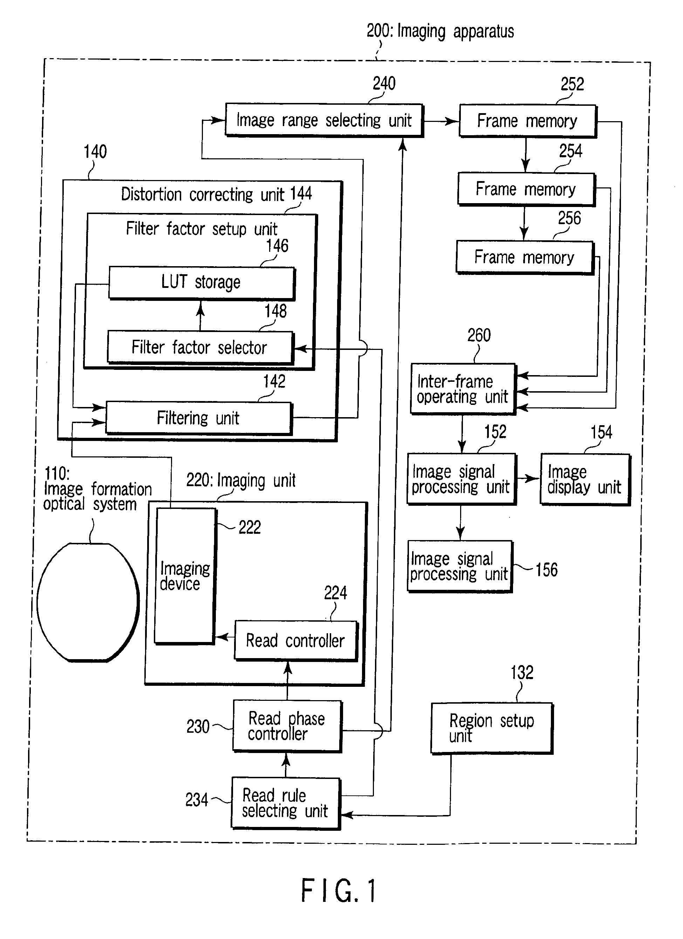

An embodiment of the present invention will be explained below with reference to the accompanying drawings. FIG. 1 is a circuit diagram showing the configuration of an imaging apparatus according to a first embodiment of the present invention. An imaging apparatus 200 includes an image formation optical system 110 and an imaging unit 220. The imaging optical system 110 forms an optical image of a subject. The imaging unit 220 outputs an image signal of a predetermined area of the optical image formed by the image formation optical system 110. Moreover, the imaging unit 220 has an aliasing MOS imaging device 222 and a read controller 224. The MOS imaging device 222 photo-electrically converts the optical image formed by the image formation optical system 110 to acquire a digital image signal (a set of pixel data). The read controller 224 is used as read means, that is, reads out the image signal acquired via the imaging device 222 in a state of thinning out pixels as the need arises.

If there is a difference between an output image signal size and an area size on the imaging device 222, the read controller 224 reads out the image signal by a thinning-out operation on the imaging device 222. More specifically, an area setup unit 132 used as acquisition area setup means sets which area of the imaging device 222 should be outputted as an image signal. In this case, a read rule selecting unit 234 used as a read pattern change means selects a read rule suitable for changing a read pattern for achieving thinning read in accordance with the set area. Then, the read controller 224 reads out an image signal via pixel thinning according to the read rule thus selected. The operation of a read phase controller 230 will be described later. Incidentally, the variable power of the image signal may be set in place of setting the image signal area.

A distortion correcting unit 140 performs predetermined distortion corrections with respect to the read image signal. Thus, the distortion correcting unit 140 used as distortion correction means includes a filtering unit 142 and a filter factor setup unit 144. The filter factor setup unit 144 has an LUT storage 146 and filter factor selector 148.

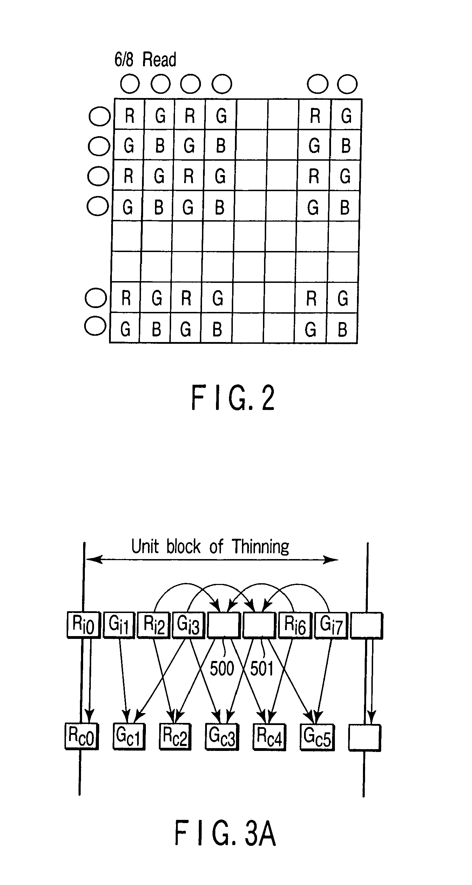

Distortion corrections of the thinning read will be explained below in detail. FIG. 2 is a view to explain an example of achieving read in a state of thinning out two pixels from eight pixels in both horizontal and vertical directions. If read is carried out using the foregoing method, an image has a step, and as a result, is distorted. For this reason, the following concept is given. Specifically, as shown in the upper stage of FIG. 3A, skipped pixels (500, 501 in FIG. 3A) data are interpolated via linear interpolation using its peripheral pixels to acquire 8-pixel data. Then, the 8-pixel data is converted into 6 pixels (as shown in the lower stage of FIG. 3A).

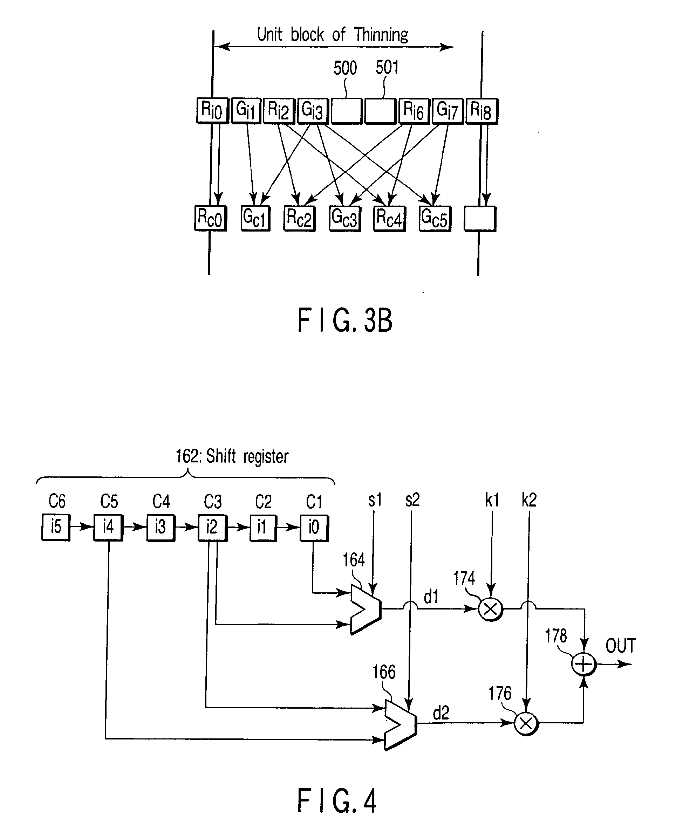

In other words, the following procedure is followed, as seen from FIG. 3B. Specifically, nonuniform pixel array sampling is transformed into uniform pixel sampling. Here, consideration is given with respect to one-line read with thinning. When the upper left of FIG. 2 is used as a reference, the read pixel position becomes $Ri0$, $Gi1$ $Ri2$, $Gi3$, $Ri6$ and $Gi7$, and then, the same array rule is repeated. In the foregoing sampling, a matrix representation of distortion corrections (transformation) is as shown in Mathematical Expression 1 given below.

[Mathematical Expression 1]

$$
\begin{pmatrix} Rc_0 \\ Gc_1 \\ Rc_2 \\ Gc_3 \\ Rc_4 \\ Gc_5 \end{pmatrix} = \begin{pmatrix} 1 & 0 & 0 & 0 & 0 & 0 \\ 0 & \dfrac{5}{6} & 0 & \dfrac{1}{6} & 0 & 0 \\ 0 & 0 & \dfrac{5}{6} & 0 & \dfrac{1}{6} & 0 \\ 0 & 0 & 0 & \dfrac{3}{4} & 0 & \dfrac{1}{4} \\ 0 & 0 & \dfrac{1}{6} & 0 & \dfrac{5}{6} & 0 \\ 0 & 0 & 0 & \dfrac{1}{12} & 0 & \dfrac{11}{12} \end{pmatrix} \begin{pmatrix} Ri_0 \\ Gi_1 \\ Ri_2 \\ Gi_3 \\ Ri_6 \\ Gi_7 \end{pmatrix} \quad \dots \ (1)
$$

Thinning read is realized using the configuration of a pipeline shown in FIG. 4. A shift register 162 shifts a holding image signal by one in the right direction every one-time operation according to clock. A selector 164 selects either of the first data (C1) or the third data (C3) of neighboring five pixel data C1 to C5 held in the shift register 162 according to the state of a control signal s1. On the other hand, a selector 166 selects either of the third data (C3) or the fifth data (C5) of neighboring five pixel data C1 to C5 held in the shift register 162 according to the state of a control signal s2. A multiplier 174 multiplies an output d1 of the selector 164 by a weight addition coefficient k1. A multiplier 176 multiplies an output d2 of the selector 166 by a weight addition coefficient k2. An adder 178 adds the output of the multiplier 174 and the output of the multiplier 176.

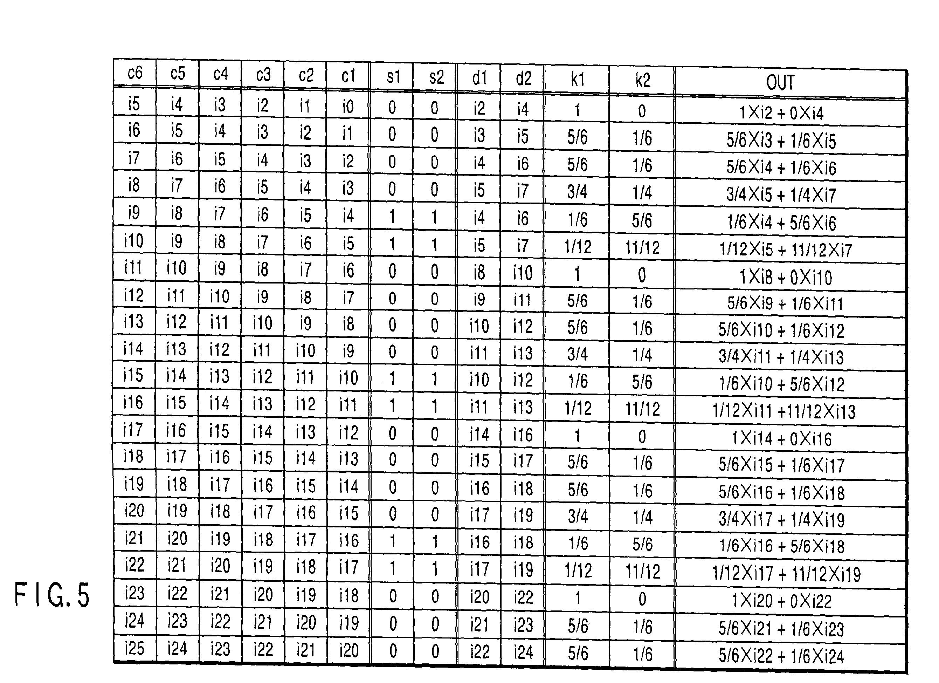

FIG. 5 is a table to explain the pipeline processing operation (state transition) performed by a filtering unit 142 shown in FIG. 1. According to the configuration of the pipeline, a pixel data sequence (i0, i1, i2, ...) supplied to the shift register 162 is shifted to the right direction every one-time operation according to clock. In this case, C1 = i0, C2 = i1, C3 = i2 ... is used as an initial state. Thus, the selector 164 selects C1 when the control signal s1 is 1 (i.e., d1 = C1) and selects C3 when the control signal s1 is 0 (i.e., d1= C3).

On the other hand, the selector 166 selects C3 when the control signal s2 is 1 (i.e., d2= C3) and selects C5 when the control signal s2 is 0 (i.e., d2= C5). Moreover, the coefficient k1 is read from the LUT storage 146 included in the filter factor setup unit 144 in synchrony with the clock, and thereafter, supplied to the multiplier 174. Simultaneously, the coefficient k2 is read, and thereafter, supplied to the multiplier 176. Therefore, the adder 178 outputs a value of k1 $\times$ d1 + k2 $\times$ d2 as an output OUT.

According to this embodiment, the following operations are synchronously performed, as seen from FIG. 5. Specifically, the operations are as follows.
Shift of pixel data (i0, i1, i2, ...)

Sequential changeover of selectors 164 and 166 according to each state of control signals s1 an s2

Output of weight coefficients k1 and k2 corresponding to the thinning rule shown using the foregoing Mathematical expression (1)

Weight addition using multipliers 174, 176 and adder 178

By doing so, pipeline processing including pixel phase operation (changeover of selector) is carried out.

The imaging apparatus of this embodiment is based on using a dynamic image as an inputted image signal. Mutually lacking pixel data are interpolated between continuous two frames so that interlaced scanning interpolates lacking pixel data between two fields. For example, the read phase controller 230 of FIG. 1 shifts a reference position of a pixel data range read via the read controller 224 so that images signals of continuous several frames do not lack pixel data. The foregoing shift is preferably in a range from 2 to 8 pixels.

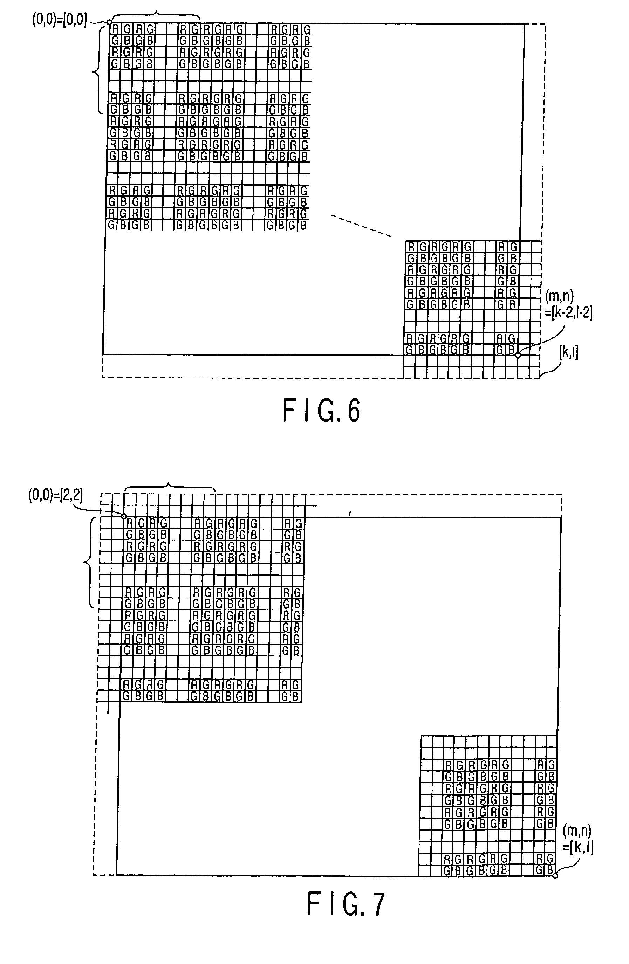

FIG. 6 and FIG. 7 are schematic views showing a state that a reference position of a read range is shifted in a 6/8 thinning read. In FIG. 6 and FIG. 7, [x, y] denotes a pixel position of the pixel array of the imaging device 222, and (x, y) denotes a pixel data array of a read range.

As illustrated in FIG. 6 and FIG. 7, the imaging device 222 has a pixel size of k pixels in the horizontal direction $\times$ 1 pixels in the vertical direction. Thus, the upper left pixel position of the imaging device 222 is expressed as [0, 0],

and the lower right pixel position is expressed as [k, 1]. Moreover, a pixel size of one frame read range is m pixels in the horizontal direction $\times$ n pixels in the vertical direction. Thus, the upper left read start position is expressed as (0, 0), and the lower right read end position is expressed as (m, n). The frame read range of FIG. 7 is shifted by +2 pixels in the horizontal direction and by +2 pixels in the vertical direction with respect to the frame read range of FIG. 6.

In the frame of FIG. 6, the upper left read start position (0, 0) corresponds to the upper left pixel position [0, 0] of the imaging device 222.

$$(0, \ 0) \ = \ [0, \ 0] \qquad\qquad \ldots (2)$$

The read end position (m, n) is expressed as follows.

$$(m, \ n) \ = \ [k \ - \ 2, \ 1 \ - \ 2] \qquad \ldots (3)$$

On the other hand, in the frame of FIG. 7, the upper left read start position is expressed as follows.

$$(0, \ 0) \ = \ [2, \ 2] \qquad\qquad \ldots (4)$$

The read end position (m, n) is expressed as follows.

$$(m, \ n) \ = \ [k, \ 1] \qquad\qquad \ldots (5)$$

The read controller 224 reads out an image signal based on a read rule that differs between several frames. Then, the filtering unit 142 carries out distortion correction filtering with respect to the image signal. Thereafter, the image signal is supplied to the image range selecting unit 240, and then, image position misalignment between frames is corrected under the control of the read phase controller 230. In this case, the image range selecting unit 240 selects a range common to the frame of FIG. 6 and the frame of FIG. 7. Specifically, the unit 240 selects a rectangular range using (2, 2) and (m, n) as the diagonal vertex with respect to the frame of FIG. 6. Moreover, the unit 240 selects a rectangular range using (0, 0) to (m - 2, n - 2) as the diagonal vertex with respect to the frame of FIG. 7. The range selected via the image range selecting unit 240 always has (m - 2) $\times$ (n - 2) pixel data.

Previously considering a cropping area, the total number of image signals read from the imaging device 222 has a need to consider output image size and phase shift. The image range selecting unit 240 changes the cropping range based on the read start position information.

Frame memories 252, 254 and 256 each comprise a FIFO (First In First Out) memory. The inter-frame operating unit 260 generates an image signal to be outputted using the same positioned pixel in first frame data and a second frame different from the first frame of these frame memories 252, 254 and 256.

For example, if two frames are given, a composite image out (i, j) is expressed as follows.

$$\text{out} \ (i, \ j) \ = \ 0.5 \ I(k, \ i, \ j) \ + \ 0.5 \ I(k \ - \ 1, \ i, \ j) \qquad \ldots (6)$$

where, i, j: pixel position
I (k, i, j): image signal strength of pixel position i, j of k frame
If three frames are given, a composite image out (i, j) is expressed as follows using weighted distribution.

$$out\ (i,\ j)\ =\ 0.25\ I(k,\ i,\ j)\ +\ 0.5\ I(k\ -\ 1,\ i,\ j)$$

$$+\ 0.25\ I(k\ -\ 2,\ i,\ j)\ \ ...\ (7)$$

An image signal of a predetermined frame is stored in frame memories 252, 254 and 256 placed the image range selecting unit 240. The inter-frame operating unit 260 performs an inter-frame operation, and thereafter, outputs the image signal to post-stage processing systems, that is, image processing unit 152, image display unit 154 and image recording unit 156. Interpolation is made between frames, and thereby, a high quality image is obtained via a low-pass filtering effect and distortion correction effect.

According to the foregoing description, thinning read is carried out in both horizontal and vertical directions, and distortion corrections are made in both horizontal and vertical directions using pipeline processing. However, an imaging device such as a CCD performing a horizontal transfer operation from vertical transfer cannot achieve thinning read in the horizontal direction, in principle. Thus, in the horizontal direction, all pixels are read using the foregoing expression (1), and thereby, size change must be made via one-dimensional interpolation. In the vertical direction, thinning read is carried out using the foregoing expression (1), and then, distortion corrections are made as above.

As described in FIG. 6 and FIG. 7, the read controller 224 shifts a thinning pattern phase between continuous frames. In this case, reset scanning for specifying the exposure time must be made before a read. In a frame before a read frame, readout pulse and reset pulse scanning are performed. In addition, the scanning time is prevented from being different for every line in the frame.

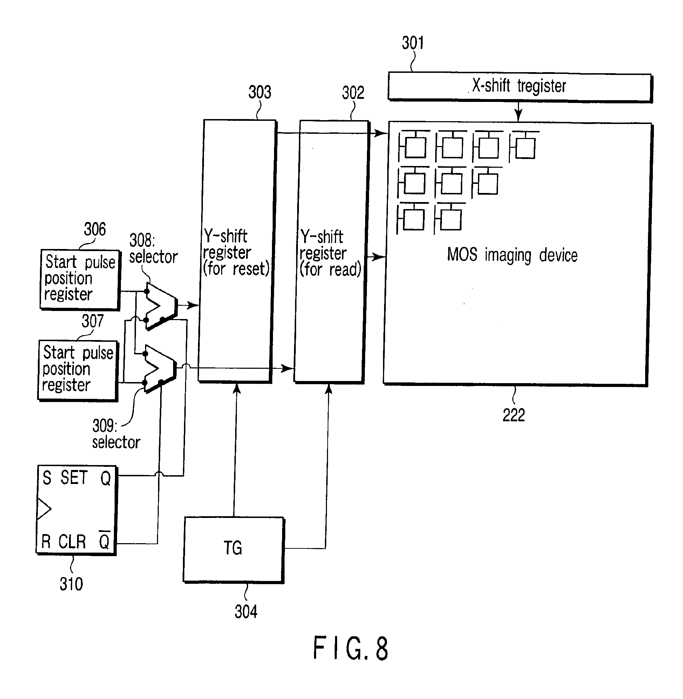

FIG. 8 is a circuit diagram showing one configuration of a read controller 224 for performing a read operation. The read controller 224 includes X-shift register 301, Y-shift register 302, Y-shift register 303, timing generator (TG) 304, start pulse position registers 306, 307, selectors 308 and 309. The X-shift register 301 scans X-direction for reading in accordance with the X-Y address coordinate. The Y-shift register 302 scans lines for reading. The Y-shift register 303 resets lines. The timing generator (TG) 304 generates a signal (timing pattern) for specifying the timing of three shift registers 301 to 303. The start pulse position registers 306 and 307 specify a read start position. The selectors 308 and 309 select either of the output of the start pulse position register 306 or the output of the register 307.

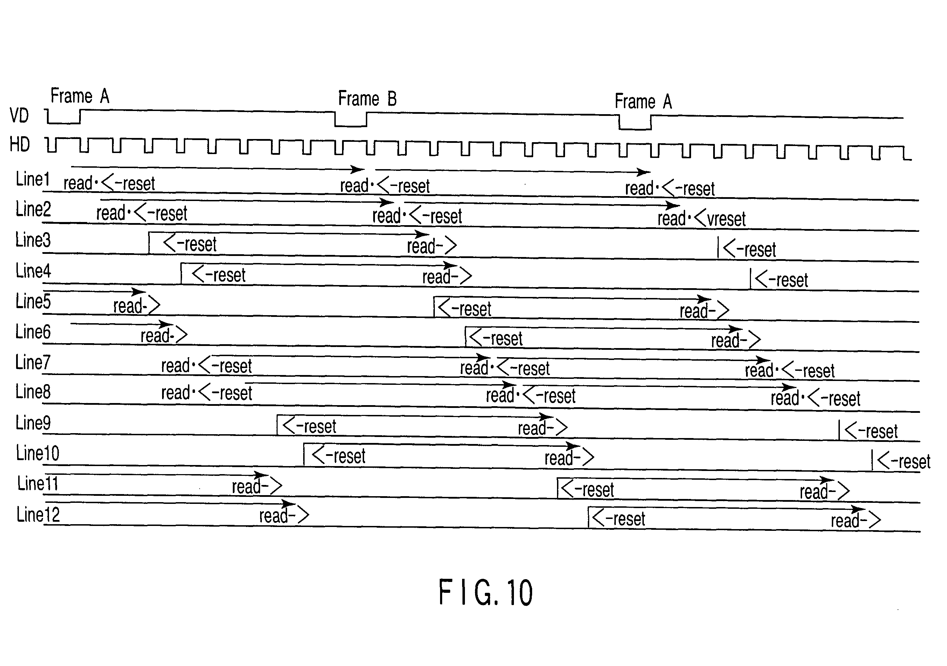

Line-direction read pulse and reset pulse operations will be explained below with reference to FIG. 9 and FIG. 10. FIG. 9 shows an example of achieving thinning read, which skips two of six lines. FIG. 10 is a timing chart showing alternately different read patterns between frames A and B. Specifically, read and reset are repeated between frames A and B.

| Frame A: | | | | | | | | |
|---|---|---|---|---|---|---|---|---|
| Line- | 1, | 2, | 5, | 6, | 7, | 8, | 11, | 12: | Read |
| Line- | 1, | 2, | 3, | 4, | 7, | 8, | 9, | 10: | Reset |
| Frame B: | | | | | | | | |
| Line- | 1, | 2, | 3, | 4, | 7, | 8, | 9, | 10: | Read |
| Line- | 1, | 2, | 5, | 6, | 7, | 8, | 11, | 12: | Reset |

According to the timing chart shown in FIG. 10, approximately one-frame storage signal is obtained in all lines. Moreover, a timing of supplying a reset pulse is shifted (made different), and thereby, the exposure time may be varied.

As seen from FIG. 10, the total number of read pulses is equal to the total number of reset pulses prior to read in each frame.

According to the time chart shown in FIG. 10, a read operation is made only for lines 5, 6, 11 and 12 of the frame A. For the next frame, frame B, the read operation is reset; therefore, when a read operation is made for the next frame A, a storage signal of nearly one frame is obtained. On the other hand, for lines 1, 2, 7 and 8, read and reset are made. In this case, the reset signal of frame A is equal to the read signal of the frame B. Thus, both timing patterns are usable as one timing pattern; therefore, the configuration is simplified.

As depicted in FIG. 6 and FIG. 7, the same read pattern is alternately shifted in phase in frames A and B. Therefore, according to the initial timing patterns stored in the TG 304 of FIG. 8, it is sufficient for achieving one thinning. The foregoing alternate shift is realized in the following manner. In FIG. 8, an FF circuit 310 is set up so that the contents of start pulse position registers 306 and 307 specifying a read start position is exclusively selected. When the Y-shift register 302 refers to the content of the start pulse position register 306, the selecting operation of selectors 308 and 309 is controlled so that the Y-shift register 303 refers to the content of the start pulse position register 307. Read and reset pulses are generated at each position according to a thinning pattern generated in the TG 304 from the start position of the start pulse position registers 306 and 307.

According to the foregoing embodiment, it is possible to use an optional electronic shutter stroke, and to generate a read pulse and reset pulse of the imaging device with a simple configuration.

Moreover, it is possible to generate an effective read pulse and reset pulse when an inter-frame operation is made.

Industrial Applicability

According to the present invention, it is possible to use an optional electronic shutter stroke, and to generate a read pulse and reset pulse of the imaging device with a simple configuration.

Moreover, it is possible to generate an effective read pulse and reset pulse when an inter-frame operation is made.

**Claims**

1. An imaging apparatus having an imaging device photo-electrically converting an optical image every pixel, and scanning the image using X-Y address to acquire an image signal, comprising:

   read means for generating a read pulse for selecting a pixel in a row or column direction and successively performing a read operation in accordance with the image signal acquired via the imaging device, and for scanning the read pulse,
   the read means scanning a reset pulse for resetting photo-electrical conversion information recorded in each read row imaging device prior to read pulse scanning carrying out read of the selected predetermined row.

2. The apparatus according to claim 1, wherein the image signal is acquired for every frame, and the total number of the read pulses of one frame is equal to the total number of the reset pulses prior to the read pulses.

3. The apparatus according to claim 1, further comprising:

   frame image acquiring means for acquiring the image signal for every frame,
   the frame image acquiring means includes:
   row read timing pattern generating means for generating a row unit timing pattern, which specifies a row reading one frame of the read pulse and a skipping row to read a predetermined row of a predetermined frame, and a row read timing pattern, which has the same row unit timing pattern of one frame of the reset pulse prior to the read pulse and is different from a phase of time equivalent to an exposure time;
   pixel read timing pattern generating means for generating a pixel unit timing pattern to specify a row-direction read start position and a read pixel; and
   frame image read means for reading a pixel based on the row unit timing pattern generated by the row read timing pattern generating means and the pixel unit timing pattern generated by the pixel read timing pattern generating means.

4. The apparatus according to claim 2 or 3, wherein a timing pattern of the read pulse is different between several frames.

5. The apparatus according to claim 4, wherein a line unit read pulse timing pattern different between several frames and a pixel unit timing pattern are generated so that the read start position on the imaging device is different for every frame using single row unit and pixel unit timing patterns.

6. The apparatus according to claim 5, wherein the read start position of the single row unit timing pattern is exclusively made different to generate the reset pulse and the read pulse.

7. The apparatus according to claim 1, further comprising:

   variable power setup means for setting a variable power of the image signal; and
   read pattern change means for caning a read pattern for achieving thinning read in accordance with the variable power set by the variable power setup means.

8. The apparatus according to claim 1, further comprising:

   acquisition area setup means for setting an acquisition area of the image signal; and

read pattern change means for changing a read pattern for achieving thinning read in accordance with the acquisition area set by the acquisition area setup mean.

**9.** The apparatus according to claim 7, further comprising:

distortion correction means for correcting a distortion of the image signal read via the thinning read.

**10.** The apparatus according to any one of claims 7 to 9, further comprising:

operation means for performing an operation between several frames.

200: Imaging apparatus

240

Image range selecting unit

252

Frame memory

254

Frame memory

256

Frame memory

140

Distortion correcting unit 144

Filter factor setup unit

146

LUT storage

148

Filter factor selector

142

Filtering unit

260

Inter-frame operating unit

152

Image signal processing unit

154

Image display unit

Image signal processing unit ~156

110:
Image formation optical system

220: Imaging unit

222

Imaging device

224

Read controller

132

Region setup unit

230 ~ Read phase controller

234 ~ Read rule selecting unit

FIG. 1

6/8 Read

FIG. 2

FIG. 3A

Unit block of Thinning

500  501

| $R_{i0}$ | $G_{i1}$ | $R_{i2}$ | $G_{i3}$ |  |  | $R_{i6}$ | $G_{i7}$ | $R_{i8}$ |

| $R_{c0}$ | $G_{c1}$ | $R_{c2}$ | $G_{c3}$ | $R_{c4}$ | $G_{c5}$ |  |

FIG. 3B

162: Shift register

| C6 | C5 | C4 | C3 | C2 | C1 |
| i5 | i4 | i3 | i2 | i1 | i0 |

s1  s2          k1  k2

164

d1

174

166

d2

176

178

OUT

FIG. 4

11

EP 1 705 902 A1

FIG.5

| c6 | c5 | c4 | c3 | c2 | c1 | s1 | s2 | d1 | d2 | k1 | k2 | OUT |
|---|---|---|---|---|---|---|---|---|---|---|---|---|
| i5 | i4 | i3 | i2 | i1 | i0 | 0 | 0 | i2 | i4 | 1 | 0 | $1 \times i2 + 0 \times i4$ |
| i6 | i5 | i4 | i3 | i2 | i1 | 0 | 0 | i3 | i5 | 5/6 | 1/6 | $5/6 \times i3 + 1/6 \times i5$ |
| i7 | i6 | i5 | i4 | i3 | i2 | 0 | 0 | i4 | i6 | 5/6 | 1/6 | $5/6 \times i4 + 1/6 \times i6$ |
| i8 | i7 | i6 | i5 | i4 | i3 | 0 | 0 | i5 | i7 | 3/4 | 1/4 | $3/4 \times i5 + 1/4 \times i7$ |
| i9 | i8 | i7 | i6 | i5 | i4 | 1 | 1 | i4 | i6 | 1/6 | 5/6 | $1/6 \times i4 + 5/6 \times i6$ |
| i10 | i9 | i8 | i7 | i6 | i5 | 1 | 1 | i5 | i7 | 1/12 | 11/12 | $1/12 \times i5 + 11/12 \times i7$ |
| i11 | i10 | i9 | i8 | i7 | i6 | 0 | 0 | i8 | i10 | 1 | 0 | $1 \times i8 + 0 \times i10$ |
| i12 | i11 | i10 | i9 | i8 | i7 | 0 | 0 | i9 | i11 | 5/6 | 1/6 | $5/6 \times i9 + 1/6 \times i11$ |
| i13 | i12 | i11 | i10 | i9 | i8 | 0 | 0 | i10 | i12 | 5/6 | 1/6 | $5/6 \times i10 + 1/6 \times i12$ |
| i14 | i13 | i12 | i11 | i10 | i9 | 0 | 0 | i11 | i13 | 3/4 | 1/4 | $3/4 \times i11 + 1/4 \times i13$ |
| i15 | i14 | i13 | i12 | i11 | i10 | 1 | 1 | i10 | i12 | 1/6 | 5/6 | $1/6 \times i10 + 5/6 \times i12$ |
| i16 | i15 | i14 | i13 | i12 | i11 | 1 | 1 | i11 | i13 | 1/12 | 11/12 | $1/12 \times i11 + 11/12 \times i13$ |
| i17 | i16 | i15 | i14 | i13 | i12 | 0 | 0 | i14 | i16 | 1 | 0 | $1 \times i14 + 0 \times i16$ |
| i18 | i17 | i16 | i15 | i14 | i13 | 0 | 0 | i15 | i17 | 5/6 | 1/6 | $5/6 \times i15 + 1/6 \times i17$ |
| i19 | i18 | i17 | i16 | i15 | i14 | 0 | 0 | i16 | i18 | 5/6 | 1/6 | $5/6 \times i16 + 1/6 \times i18$ |
| i20 | i19 | i18 | i17 | i16 | i15 | 0 | 0 | i17 | i19 | 3/4 | 1/4 | $3/4 \times i17 + 1/4 \times i19$ |
| i21 | i20 | i19 | i18 | i17 | i16 | 1 | 1 | i16 | i18 | 1/6 | 5/6 | $1/6 \times i16 + 5/6 \times i18$ |
| i22 | i21 | i20 | i19 | i18 | i17 | 1 | 1 | i17 | i19 | 1/12 | 11/12 | $1/12 \times i17 + 11/12 \times i19$ |
| i23 | i22 | i21 | i20 | i19 | i18 | 0 | 0 | i20 | i22 | 1 | 0 | $1 \times i20 + 0 \times i22$ |
| i24 | i23 | i22 | i21 | i20 | i19 | 0 | 0 | i21 | i23 | 5/6 | 1/6 | $5/6 \times i21 + 1/6 \times i23$ |
| i25 | i24 | i23 | i22 | i21 | i20 | 0 | 0 | i22 | i24 | 5/6 | 1/6 | $5/6 \times i22 + 1/6 \times i24$ |

FIG. 6

FIG. 7

FIG. 8

Frame A          Frame B

Line1   R G R G ...   R G R G ...
Line2   G B G B ...   G B G B ...
Line3           ...   R G R G ...
Line4           ...   G B G B ...
Line5   R G R G ...           ...
Line6   G B G B ...           ...
Line7   R G R G ...   R G R G ...
Line8   G B G B ...   G B G B ...
Line9           ...   R G R G ...
Line10          ...   G B G B ...
Line11  R G R G ...           ...
Line12  G B G B ...           ...

FIG.9

FIG. 10

EP 1 705 902 A1

<div align="center">**INTERNATIONAL SEARCH REPORT**</div>

| International application No. |
| --- |
| PCT/JP2004/019408 |

A. CLASSIFICATION OF SUBJECT MATTER
Int.Cl⁷ H04N5/335, 5/232, 9/07

According to International Patent Classification (IPC) or to both national classification and IPC

B. FIELDS SEARCHED

Minimum documentation searched (classification system followed by classification symbols)
Int.Cl⁷ H04N5/222-257, 5/30-5/335, 9/07

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2005 |
| Kokai Jitsuyo Shinan Koho | 1971–2005 | Jitsuyo Shinan Toroku Koho | 1996–2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2001-309236 A (Fujifilm Microdevices Co., Ltd.),<br>02 November, 2001 (02.11.01),<br>Full text; Figs. 1 to 13<br>& US 2001/33333 A1 | 1,2<br>4,7-10 |
| Y | JP 2003-338988 A (Olympus Optical Co., Ltd.),<br>28 November, 2003 (28.11.03),<br>Full text; Figs. 1 to 28<br>& US 2003/227552 A1 | 4,10 |
| Y | JP 2003-46876 A (Olympus Optical Co., Ltd.),<br>14 February, 2003 (14.02.03),<br>Full text; Figs. 1 to 15<br>& US 2003/20819 A1     & EP 1282304 A1 | 7,8 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>25 March, 2005 (25.03.05) | Date of mailing of the international search report<br>12 April, 2005 (12.04.05) |
| --- | --- |
| Name and mailing address of the ISA/<br>Japanese Patent Office | Authorized officer |
| Facsimile No. | Telephone No. |

Form PCT/ISA/210 (second sheet) (January 2004)

## INTERNATIONAL SEARCH REPORT

| | International application No. |
|---|---|
| | PCT/JP2004/019408 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-314868 A  (Olympus Optical Co., Ltd.),<br>25 October, 2002 (25.10.02),<br>Full text; Figs. 1 to 24<br>& US 2002/154912 A1    & EP 1250001 A2 | 7,8 |
| Y | JP 2002-112096 A  (Sony Corp.),<br>12 April, 2002 (12.04.02),<br>Full text; Figs. 1 to 6<br>(Family: none) | 9 |
| Y | JP 2002-238058 A  (Matsushita Electric<br>Industrial Co., Ltd.),<br>23 August, 2002 (23.08.02),<br>Full text; Figs. 1 to 6<br>(Family: none) | 9 |
| A | JP 2002-369083 A  (Olympus Optical Co., Ltd.),<br>20 December, 2002 (20.12.02),<br>Full text; Figs. 1 to 32<br>(Family: none) | 1-10 |
| A | JP 2002-330329 A  (Olympus Optical Co., Ltd.),<br>15 November, 2002 (15.11.02),<br>Full text; Figs. 1 to 20<br>& US 2002/158973 A1 | 1-10 |
| A | JP 2000-41186 A  (Minolta Co., Ltd.),<br>08 February, 2000 (08.02.00),<br>Full text; Figs. 1 to 8<br>(Family: none) | 1-10 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002314868 A
- WO 2002314868 A